# EUROPÄISCHE PATENTSCHRIFT

(11) **EP 0 792 527 B1**
(45) Veröffentlichungstag und Bekanntmachung des Hinweises auf die Patenterteilung: **01.04.1998**
(21) Anmeldenummer: 95937064.4
(22) Anmeldetag: 11.11.1995
(51) Int. Cl.: H01M 4/86, H01M 8/14

(54) **DOPPELSCHICHTKATHODE FÜR SCHMELZKARBONATBRENNSTOFFZELLEN**
DOUBLE LAYER CATHODE FOR MOLTEN CARBONATE FUEL CELLS
CATHODE A DOUBLE COUCHE POUR CELLULES ELECTROCHIMIQUES EN CARBONATE FONDU

(30) Priorität: 15.11.1994 DE 4440696
(43) Veröffentlichungstag der Anmeldung: 03.09.1997
(73) Patentinhaber: MTU Motoren- und Turbinen-Union Friedrichshafen GmbH, 88045 Friedrichshafen (DE)
(72) Erfinder: SÖLLNER, Oliver, D-82024 Taufkirchen (DE); NITSCHK , Felix, D-81371 München (DE); ROHLAND, Bernd, D-89081 Ulm (DE); JANTSCH, Uwe, D-89160 Dornstadt (DE)
(74) Vertreter: Winter, Josef
(86) Internationale Anmeldenummer: EP9504435
(87) Internationale Veröffentlichungsnummer: WO9615561

(56) Entgegenhaltungen:
- EP-A- 0 124 262
- DE-C- 4 302 347
- US-A- 4 448 857
- US-A- 4 567 651
- US-A- 4 939 111
- US-A- 4 992 342
- JOURNAL OF THE AMERICAN CERAMIC SOCIETY, Band 73, Nr. 3, März 1990, US, ISSN 0002-7820; C.E. BAUMGARTNER, Seiten 516-5120

## Beschreibung

Die Erfindung betrifft eine Doppelschichtkathode für eine Schmelzkarbonatbrennstoffzelle mit einer Kathode aus einem Kathodenmaterial und einer Matrix aus einem Elektrolytmaterial, sowie ein Verfahren zur Herstellung einer solchen.

Nach dem heutigen Stand der Technik werden bei Schmelzkarbonatbrennstoffzellen Kathoden aus porösem Nickeloxid verwendet, das mit Lithium dotiert ist. Da der elektrische Widerstand von Nickeloxid verhältnismäßig gering ist (0,05 Ohm cm) und dessen elektrokatalytische Aktivität hoch ist (Austauschstromdichte 0,8 mA/cm²), ergeben solche aus Nickeloxid hergestellte Kathoden eine gute Zellleistung. Wegen des geringen Widerstands kann die Kathode zudem ausreichend dick hergestellt werden, ca. 1 mm, so daß eine gleichmäßige Gasverteilung gewährleistet wird. Ein Nachteil von aus Nickeloxid hergestellten Kathoden besteht jedoch darin, daß sie keine ausreichende Korrosionsbeständigkeit aufweisen: An der aus LiAlO₂-Trägermaterial und einem Elektrolytmaterial hergestellten Matrix, auf der die Kathode und die Anode der Brennstoffzelle angeordnet sind, geht Nickeloxid in Lösung; Nickel wird in die Matrix transportiert und scheidet sich dort als metallisches Nickel ab. Dies führt im Laufe der Zeit zu einem innerlichen Kurzschluß der Zelle. Die Auflösungs- und Abscheiderate des Nickeloxids beträgt 2 bis 4 Mikrogramm pro Stunde und Quadratzentimeter, wodurch die Lebensdauer der Brennstoffzelle auf etwa 10.000 Stunden begrenzt wird. Für eine wirtschaftliche Nutzung der Brennstoffzellentechnologie ist jedoch eine Lebensdauer von mindestens 40.000 Stunden Voraussetzung. Da weiterhin die Löslichkeit des Nickeloxids in dem Elektrolytmaterial mit steigendem Kohlendioxid-Partialdruck linear zunimmt, ist der wirtschaftlich besonders interessante Druckbetrieb bei Schmelzkarbonatbrennstoffzellen mit Kathoden aus Nickeloxid ausgeschlossen. Es sind zwar schon alternative, korrosionsbeständige Kathodenmaterialien beschrieben worden, diese haben aber entweder einen zu hohen spezifischen Widerstand, um ausreichend dicke Kathoden herstellen zu können, oder eine ausreichende Querleitfähigkeit zum Stromkollektor zu gewährleisten. So beträgt beispielsweise der spezifische Widerstand von Lithiumkobaltit ca. 0,8 Ohm cm, von dotiertem Lithiumferrit ca. 8 bis 30 Ohm cm, von Lithiummanganat etwa 20 bis 600 Ohm cm. Zudem ist Lithiumkobaltit, das von den genannten Materialien noch den geringsten spezifischen Widerstand hat, zu teuer, um ausreichend dicke Kathoden aus diesem Material wirtschaftlich herstellen zu können.

US-A-4 567 651 offenbart die Herstellung einer Elektrode, die auf der an die Elektrolytmatrix angrenzenden Seite eine erste Schicht besitzt, die kleinere Poren aufweist, als die an den Gasraum auf der anderen Seite angrenzende zweite Schicht. Die Poren der an die Elektrolytmatrix angrenzenden Schicht sind so klein, daß sie aufgrund der Kapillarität vollständig mit Elektrolyt geflutet werden und so eine bei größeren Druckunterschieden benötigte Barriere gegen den Durchtritt von Gas zur Anode darstellen.

US-A-4 992 342 betrifft eine Schmelzkarbonat-Brennstoffzelle. Sie weist eine Schicht zwischen Elektrolytmatrix und Gaskathode auf, die vorzugsweise aus Oxiden der Metalle aus den Gruppen besteht, die Eisen, Mangan, Kobalt, Barium und Strontium enthalten, d. h., daß gegenüber dem Elektrolyten korrosionsbeständige Materialien verwendet wurden. Im Unterschied zum Erfiindungsgegenstand ist diese Schicht feinporig und mit Elektrolyt völlig geflutet (Poren 0,3 bis 0,4 µm - siehe Spalte 2, Zeilen 58 und 59). Diese Schicht wirkt daher nicht wie eine elektrochemische Gaselektrode, sondern als "retarding layer" gegen die Auflösung des Nickeloxids. Die auf der Elektrolytmatrix abgewandten Seite angrenzende Kathodenschicht aus Nickeloxid steht aufgrund der Füllung der Zwischenschicht (retarding layer) unmittelbar mit dem Elektrolyt in Kontakt und ist damit unmittelbar den korrosiven Angriffen des Elektrolyten ausgesetzt. Die feinporige elektrolytgefüllte Schicht zwischen Gaselektrode und Elektrolytmatrix hat nicht die Funktion einer Kathodenschicht, die gasgefüllte Poren aufweist und an die Elektrolytmatrix anschließt.

Die Aufgabe der vorliegenden Erfindung ist es somit, eine Kathode für eine Schmelzkarbonatbrennstoffzelle anzugeben, die eine hohe Lebensdauer aufweist. Weiterhin soll durch die Erfindung ein Verfahren zur Herstellung einer solchen Kathode angegeben werden.

Gemäß der Erfindung wird diese Aufgabe gelöst durch das im Anspruch 1 angegebene Verfahren zur Herstellung einer Doppelschichtkathode für eine Schmelzkarbonatbrennstoffzelle.

Weiterhin wird diese Aufgabe gelöst durch die im Anspruch 10 angegebene Doppelschichtkathode für eine Schmelzkarbonatbrennstoffzelle.

Ein wesentlicher Vorteil der vorliegenden Erfindung besteht darin, daß die erfindungsgemäße Doppelschichtkathode eine gute Leitfähigkeit hat, so daß genügend dicke Kathoden zur Erlangung einer ausreichend guten Querleitfähigkeit möglich sind.

Ein weiterer wesentlicher Vorteil der Erfindung besteht darin, daß durch die hohe Korrosionsbeständigkeit die Herstellung von Schmelzkarbonatbrennstoffzellen für einen Betrieb mit erhöhtem Kohlendioxid-Partialdruck möglich ist.

Vorteilhafte Weiterbildungen der vorliegenden Erfindung sind in den Unteransprüchen gekennzeichnet.

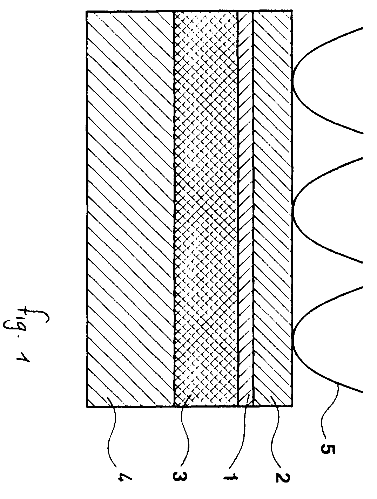

Im folgenden wird ein Ausführungsbeispiel der Erfindung anhand der Zeichnung erläutert.

Die einzige Figur zeigt schematisiert die Querschnittsansicht durch eine Brennstoffzelle mit einer Doppelschichtkathode gemäß einem Ausführungsbeispiel der Erfindung.

Die in der Figur im Schnitt schematisch dargestellte Brennstoffzelle enthält als wesentliche Elemente eine aus zwei Schichten 1 und 2 aufgebaute Kathode und eine Anode 4, zwischen denen eine Elektrolyt-Matrix 3 eingeschlossen ist. Auf der Oberseite der Kathode ist ein Stromkollektor 5 angeordnet. Die Elektrolyt-Matrix besteht aus einem hochporösem und gleichzeitig feinporigen Matrixkörper, in welchem ein Schmelzelektrolyt fixiert ist. Der Schmelzelektrolyt besteht üblicherweise aus binären oder ternären Alkalikarbonatschmelzen, während die Anode 4 üblicherweise aus Nickel besteht. Die erste, zu der Elektrolyt-Matrix 3 hingewandte und somit der Korrosion besonders ausgesetzte Schicht 1 der Kathode besteht aus einem porösen Material auf der Basis von Eisen, Mangan oder Kobalt oder einem anderen korrosionsbeständigen Material. Der Kontakt zu dem Stromkollektor und dem über der Kathode befindlichen von dem Kathodengas durchströmten Gasraum wird durch eine poröse, gut leitfähige Schicht 2 gebildet, die bei dem vorliegenden Ausführungsbeispiel vorzugsweise aus Nickeloxid hergestellt ist.

Die beiden Schichten 1 und 2 der Kathode können auf unterschiedliche Weise herstellt sein. Gemäß dem Ausführungsbeispiel ist jede der beiden Schichten 1 und 2 getrennt als Folie hergestellt, die dann übereinander angeordnet und durch Sintern miteinander verbunden worden sind. Alternativ kann auch die eine der beiden Schichten 1 und 2 als Folie hergestellt und die andere Schicht durch einen Druck- oder Siebdruckvorgang des Materials der anderen Schicht darauf aufgebracht werden. Weiterhin besteht die Möglichkeit, die beiden Schichten gemeinsam durch ein Doppel-Tape-Folienziehverfahren herzustellen.

Das Verhältnis der Dicken der beiden Kathodenschichten 1 und 2 zueinander ist abhängig von den gewählten Materialien und von der Auslegung der Brennstoffzelle. Üblicherweise wird die Dicke der Schicht 2 größer sein als die Dicke der Schicht 1, so kann die Dicke der Schicht 2 bis zum Zehnfachen der Dicke der Schicht 1 betragen. Gegebenenfalls kann aber auch die Dicke der Schicht 1 bis zum Zweifachen größer gewählt werden als die Dicke der Schicht 2, so daß insgesamt das Verhältnis der Dicken der Schichten 1 und 2 von 1 : 10 bis 1 : 0,5 beträgt. Diese Größenverhältnisse sind jedoch nur als bevorzugte Werte anzusehen, nicht jedoch als eine Beschränkung der Erfindung. Die Gesamtdicke der beiden Schichten 1 und 2 beträgt vorzugsweise zwischen 0,5 und 1 mm. Auch diese bevorzugten Bemessungen sind jedoch nicht als Beschränkungen zu verstehen.

Die vorliegende Erfindung ermöglicht die Herstellung einer Schmelzkarbonatbrennstoffzelle mit einer Doppelschichtkathode, durch die die Lebensdauer herkömmlicher Lithium-dotierter Nickeloxidkathoden bei ähnlich guter Leistung um ein Mehrfaches übertroffen wird. Durch die hohe Korrosionsbeständigkeit der erfindungsgemäßen Doppelschichtkathode ist auch ein Brennstoffzellenbetrieb mit erhöhtem Kohlendioxid-Partialdruck möglich.

## Patentansprüche

1. Verfahren zur Herstellung einer Doppelschichtkathode für eine Schmelzkarbonatbrennstoffzelle mit einer Kathode aus einem Kathodenmaterial und einer Matrix (3) aus einem Trägermaterial und Elektrolytmaterial, **dadurch gekennzeichnet**, daß die Kathode aus zwei Schichten (1, 2) aus unterschiedlichen Kathodenmaterialien hergestellt wird, von denen die der Matrix (3) zugewandte erste Schicht (1) aus einem porösen korrosionsbeständigen Material hergestellt wird und die der Matrix (3) abgewandte zweite Schicht (2) aus einem porösen gut leitfähigem Material hergestellt wird, wobei die Poren beider Schichten (1, 2) gasführend ausgebildet sind.

2. Verfahren nach Anspruch 1, **dadurch gekennzeichnet**, daß das Material der ersten Schicht (1) eine höhere Korrosionsbeständigkeit als das der zweiten Schicht (2) und das Material der zweiten Schicht (2) eine höhere Leitfähigkeit als das der ersten Schicht (1) hat.

3. Verfahren nach Anspruch 1 oder 2, **dadurch gekennzeichnet**, daß die erste Schicht (1) aus einem Material auf der Basis von Eisen, Mangan oder Kobalt hergestellt wird.

4. Verfahren nach Anspruch 1, 2 oder 3, **dadurch gekennzeichnet**, daß die zweite Schicht (2) aus Nickeloxid oder Ni-Metall hergestellt wird.

5. Verfahren nach einem der Ansprüche 1 bis 4, **dadurch gekennzeichnet**, daß die erste und zweite Kathodenschicht (1, 2) getrennt als Folien hergestellt und die Folien zum Bilden der Kathode zusammengesintert werden.

6. Verfahren nach einem der Ansprüche 1 bis 4, **dadurch gekennzeichnet**, daß die beiden Kathodenschichten (1, 2) durch ein Doppel-Tape-Folienziehverfahren hergestellt werden.

7. Verfahren nach einem der Ansprüche 1 bis 4, **dadurch gekennzeichnet**, daß eine der beiden Kathodenschichten (1, 2) als Folie aus dem einen Kathodenmaterial hergestellt wird, und daß die andere der beiden Kathodenschichten (1, 2) durch Drucken oder Siebdrucken des anderen Kathodenmaterials auf die eine Kathodenschicht gebildet wird.

8. Verfahren nach einem der Ansprüche 1 bis 7, **dadurch gekennzeichnet**, daß die beiden Schichten (1, 2) mit einem Dickenverhältnis der ersten Schicht (1) zu der zweiten Schicht (2) von 1 : 20 bis 1 : 0,5 hergestellt werden.

9. Verfahren nach einem der Ansprüche 1 bis 8, **dadurch gekennzeichnet**, daß die beiden Schichten (1, 2) mit einer Gesamtschichtdicke von 0,5 bis 1 mm hergestellt werden.

10. Doppelschichtkathode für eine Schmelzkarbonatbrennstoffzelle mit einer Kathode aus einem Kathodenmaterial und einer Matrix (3) aus einem Elektrolytmaterial, **dadurch gekennzeichnet**, daß die Kathode aus zwei Schichten (1, 2) aus unterschiedlichen Kathodenmaterialien besteht, von denen die der Matrix (3) zugewandte erste Schicht (1) aus einem porösen korrosionsbeständigen Material besteht und die der Matrix (3) abgewandte zweite Schicht (2) aus einem porösen gut leitfähigen Material besteht, wobei die Poren beider Schichten (1, 2) gasführend ausgebildet sind.

11. Doppelschichtkathode nach Anspruch 10, **dadurch gekennzeichnet,** daß das Material der ersten Schicht (1) eine höhere Korrosionsbeständigkeit als das der zweiten Schicht (2) hat und das Material der zweiten Schicht (2) eine höhere Leitfähigkeit als das der ersten Schicht (1) hat.

12. Doppelschichtkathode nach Anspruch 10 oder 11, **dadurch gekennzeichnet**, daß die erste Schicht (1) aus einem Material auf der Basis von Eisen, Mangan oder Kobalt besteht.

13. Doppelschichtkathode nach Anspruch 10, 11, oder 12, **dadurch gekennzeichnet**, daß die zweite Schicht (2) aus Nickeloxid besteht.

14. Doppelschichtkathode nach einem der Ansprüche 10 bis 13, **dadurch gekennzeichnet**, daß die erste und zweite Kathodenschicht (1, 2) aus Folien bestehen, die durch Sintern miteinander verbunden sind.

15. Doppelschichtkathode nach einem der Ansprüche 10 bis 13, **dadurch gekennzeichnet**, daß die beiden Kathodenschichten (1, 2) durch ein Doppel-Tape-Folienziehverfahren gebildet sind.

16. Doppelschichtkathode nach einem der Ansprüche 10 bis 13, **dadurch gekennzeichnet**, daß eine der beiden Kathodenschichten (1, 2) aus einer Folie aus einem Kathodenmaterial besteht, und daß die andere der beiden Kathodenschichten (1, 2) aus einer durch Drucken oder Siebdrucken des anderen Kathodenmaterials auf der einen Kathodenschicht gebildeten Schicht besteht.

17. Doppelschichtkathode nach einem der Ansprüche 10 bis 13, **dadurch gekennzeichnet**, daß beide Schichten aus Folien des jeweiligen Metallpulvers hergetellt werden, welche nachträglich durch Oxidation in die jeweiligen Verbindungen übergeführt werden.

18. Doppelschichtkathode nach einem der Ansprüche 10 bis 17, **dadurch gekennzeichnet**, daß die beiden Schichten ein Dickenverhältnis der ersten Schicht (1) zu der zweiten Schicht (2) von 1 : 10 bis 1 : 0,5 aufweisen.

19. Doppelschichtkathode nach einem der Ansprüche 10 bis 18, **dadurch gekennzeichnet**, daß die beiden Schichten (1, 2) eine Gesamtschichtdicke von 0,5 bis 1 mm haben.

## Claims

1. Method for producing a double layer cathode for a molten carbonate fuel cell having a cathode made of a cathode material and having a matrix (3) made of a base material and electrolyte material, characterized in that the cathode is produced from two layers (1, 2) of different cathode materials, of which the first layer (1), which faces the matrix (3), is produced from a porous, corrosion-resistant material and the second layer (2), which faces away from the matrix (3), is produced from a porous, highly conductive material, the pores of both layers (1, 2) being designed to carry gas.

2. Method according to Claim 1, characterized in that the material of the first layer (1) has better corrosion resistance than that of the second layer (2), and the material of the second layer (2) has better conductivity than that of the first layer (1).

3. Method according to Claim 1 or 2, characterized in that the first layer (1) is produced from a material based on iron, manganese or cobalt.

4. Method according to Claim 1, 2 or 3, characterized in that the second layer (2) is produced from nickel oxide or nickel-metal.

5. Method according to one of Claims 1 to 4, characterized in that the first and the second cathode layer (1, 2) are produced separately as sheets, and the sheets are sintered together to form the cathode.

6. Method according to one of Claims 1 to 4, characterized in that the two cathode layers (1, 2) are produced by a double-tape sheet drawing method.

7. Method according to one of Claims 1 to 4, characterized in that one of the two cathode layers (1, 2) is produced as a sheet from one cathode material, and in that the other of the two cathode layers (1, 2) is formed by printing or screen printing of the other cathode material onto the one cathode layer.

8. Method according to one of Claims 1 to 7, characterized in that the two layers (1, 2) are produced with a thickness ratio of 1:20 to 1:0.5 between the first layer (1) and the second layer (2).

9. Method according to one of Claims 1 to 8, characterized in that the two layers (1, 2) are produced with a total layer thickness of 0.5 to 1 mm.

10. Double layer cathode for a molten carbonate fuel cell having a cathode made of a cathode material and having a matrix (3) made of an electrolyte material, characterized in that the cathode comprises two layers (1, 2) of different cathode materials, of which the first layer (1), which faces the matrix (3), is composed of a porous, corrosion-resistant material, and the second layer (2), which faces away from the matrix (3), is composed of a porous, highly conductive material, the pores of both layers (1, 2) being designed to carry gas.

11. Double layer cathode according to Claim 10, characterized in that the material of the first layer (1) has better corrosion resistance than that of the second layer (2), and the material of the second layer (2) has better conductivity than that of the first layer (1).

12. Double layer cathode according to Claim 10 or 11, characterized in that the first layer (1) is produced from a material based on iron, manganese or cobalt.

13. Double layer cathode according to Claim 10, 11 or 12, characterized in that the second layer (2) is composed of nickel oxide.

14. Double layer cathode according to one of Claims 10 to 13, characterized in that the first and the second cathode layer (1, 2) are composed of sheets which are connected to one another by sintering.

15. Double layer cathode according to one of Claims 10 to 13, characterized in that the two cathode layers (1, 2) are formed by a double-tape sheet drawing method.

16. Double layer cathode according to one of Claims 10 to 13, characterized in that one of the two cathode layers (1, 2) is composed of a sheet made of a cathode material, and in that the other of the two cathode layers (1, 2) is composed of a layer which is formed by printing or screen printing the other cathode material on the one cathode layer.

17. Double layer cathode according to one of Claims 10 to 13, characterized in that both layers are produced from sheets of the respective metal powder, which sheets are subsequently changed to the respective compounds by oxidation.

18. Double layer cathode according to one of Claims 10 to 17, characterized in that the two layers have a thickness ratio of 1:10 to 1:0.5 between the first layer (1) and the second layer (2).

19. Double layer cathode according to one of Claims 10 to 18, characterized in that the two layers (1, 2) have a total layer thickness of 0.5 to 1 mm.

## Revendications

1. Procédé de fabrication d'une cathode à double couche pour une cellule électrochimique en carbonate fondu comportant une cathode faite d'un matériau de cathode, et une matrice (3) faite d'un matériau de support et d'un matériau d'électrolyte, caractérisé en ce que la cathode est fabriquée à partir de deux couches (1, 2) faites de matériaux de cathode différents, dont la première couche (1), tournée vers la matrice (3), est fabriquée en matériau poreux résistant à la corrosion, et dont la deuxième couche (2), éloignée de la matrice (3), est fabriquée en matériau poreux bon conducteur, les pores des deux couches (1, 2) étant formés de manière à laisser passer les gaz.

2. Procédé suivant la revendication 1, caractérisé en ce que le matériau de la première couche (1) présente une résistance à la corrosion plus élevée que celle du matériau de la deuxième couche (2), et en ce que le matériau de la deuxième couche (2) présente une conductibilité supérieure à celle du matériau de la première couche (1).

3. Procédé suivant la revendication 1 ou 2, caractérisé en ce que la première couche (1) est fabriquée à partir de fer, de manganèse ou de cobalt.

4. Procédé suivant la revendication 1, 2 ou 3, caractérisé en ce que la deuxième couche (2) est fabriquée en oxyde de nickel ou en Ni métallique.

5. Procédé suivant l'une quelconque des revendications 1 à 4, caractérisé en ce que les première et deuxième couches (1, 2) de la cathode sont fabriquées séparément sous forme de feuilles et en ce que les feuilles sont unies par frittage pour former la cathode.

6. Procédé suivant l'une quelconque des revendications 1 à 4, caractérisé en ce que les deux couches (1, 2) de la cathode sont fabriquées par un procédé d'étirement de feuilles en double bande.

7. Procédé suivant l'une quelconque des revendications 1 à 4, caractérisé en ce que l'une des deux couches (1, 2) de la cathode est fabriquée sous forme de feuille à partir de l'un des matériaux de cathode, et en ce que l'autre des deux couches (1, 2) de la cathode est formée par impression ou par sérigraphie de l'autre matériau de cathode sur la première couche de la cathode.

8. Procédé suivant l'une quelconque des revendications 1 à 7, caractérisé en ce que les deux couches (1, 2) sont fabriquées avec un rapport des épaisseurs de la première couche (1) à la deuxième couche (2) de 1:20 à 1:0,5.

9. Procédé suivant l'une quelconque des revendications 1 à 8, caractérisé en ce que les deux couches (1, 2) sont fabriquées avec une épaisseur totale de couche de 0,5 à 1 mm.

10. Cathode à double couche pour une cellule électrochimique en carbonate fondu comportant une cathode en matériau de cathode et une matrice (3) faite d'un matériau d'électrolyte, caractérisée en ce que la cathode se compose de deux couches (1, 2) faites de matériaux de cathode différents, dont la première couche (1), tournée vers la matrice (3), est fabriquée en matériau poreux résistant à la corrosion, et dont la deuxième couche (2), éloignée de la matrice (3), se compose d'un matériau poreux bon conducteur, les pores des deux couches (1, 2) étant formés de manière à laisser passer les gaz.

11. Cathode à double couche suivant la revendication 10, caractérisée en ce que le matériau de la première couche (1) présente une résistance à la corrosion plus élevée que celle du matériau de la deuxième couche (2), et en ce que le matériau de la deuxième couche (2) présente une conductibilité supérieure à celle du matériau de la première couche (1).

12. Cathode à double couche suivant la revendication 10 ou 11, caractérisée en ce que la première couche (1) est composée d'un matériau à base de fer, de manganèse ou de cobalt.

13. Cathode à double couche suivant la revendication 10, 11 ou 12, caractérisée en ce que la deuxième couche (2) est composée d'oxyde de nickel.

14. Cathode à double couche suivant l'une quelconque des revendications 10 à 13, caractérisée en ce que les première et deuxième couches (1, 2) de la cathode sont formées de feuilles qui sont unies l'une à l'autre par frittage.

15. Cathode à double couche suivant l'une quelconque des revendications 10 à 13, caractérisée en ce que les deux couches (1, 2) de la cathode sont formées par un procédé d'étirement de feuilles en double bande.

16. Cathode à double couche suivant l'une quelconque des revendications 10 à 13, caractérisée en ce que l'une des deux couches (1, 2) de la cathode est formée d'une feuille d'un matériau de cathode, et que l'autre des deux couches (1, 2) de la cathode est formée d'une couche formée par impression ou par sérigraphie de l'autre matériau de cathode sur la première couche de la cathode.

17. Cathode à double couche suivant l'une quelconque des revendications 10 à 13, caractérisée en ce que les deux couches sont fabriquées à partir de feuilles de chaque poudre métallique, qui sont ensuite transformées par oxydation en chacun des composés.

18. Cathode à double couche suivant l'une quelconque des revendications 10 à 17, caractérisée en ce que les deux couches présentent un rapport des épaisseurs de la première couche (1) à la deuxième couche (2) de 1:10 à 1:0,5.

19. Cathode à double couche suivant l'une quelconque des revendications 10 à 18, caractérisée en ce que les deux couches (1, 2) ont une épaisseur totale de couche de 0,5 à 1 mm.
